Europäisches Patentamt

European Patent Office

Office européen des brevets

(11) Veröffentlichungsnummer: **0 205 016**
A2

## (12) EUROPÄISCHE PATENTANMELDUNG

(21) Anmeldenummer: **86107075.3**

(22) Anmeldetag: **24.05.86**

(51) Int. Cl.⁴: **H 04 J 3/06**

(30) Priorität: **08.06.85 DE 3520606**

(43) Veröffentlichungstag der Anmeldung:
**17.12.86 Patentblatt 86/51**

(84) Benannte Vertragsstaaten:
**AT DE FR IT**

(71) Anmelder: **Blaupunkt-Werke GmbH**
**Robert-Bosch-Strasse 200**
**D-3200 Hildesheim(DE)**

(72) Erfinder: **Leyser, Klaus, Dipl.-Ing.**
**Lehmkamp 35c**
**D-3201 Barienrode(DE)**

(74) Vertreter: **Eilers, Norbert, Dipl.-Phys.**
**Blaupunkt-Werke GmbH Robert-Bosch-Strasse 200**
**D-3200 Hildesheim(DE)**

(54) **Verfahren zur gleichzeitigen Übertragung von in parallelen Nachrichtenkanälen auftretenden Nachrichten.**

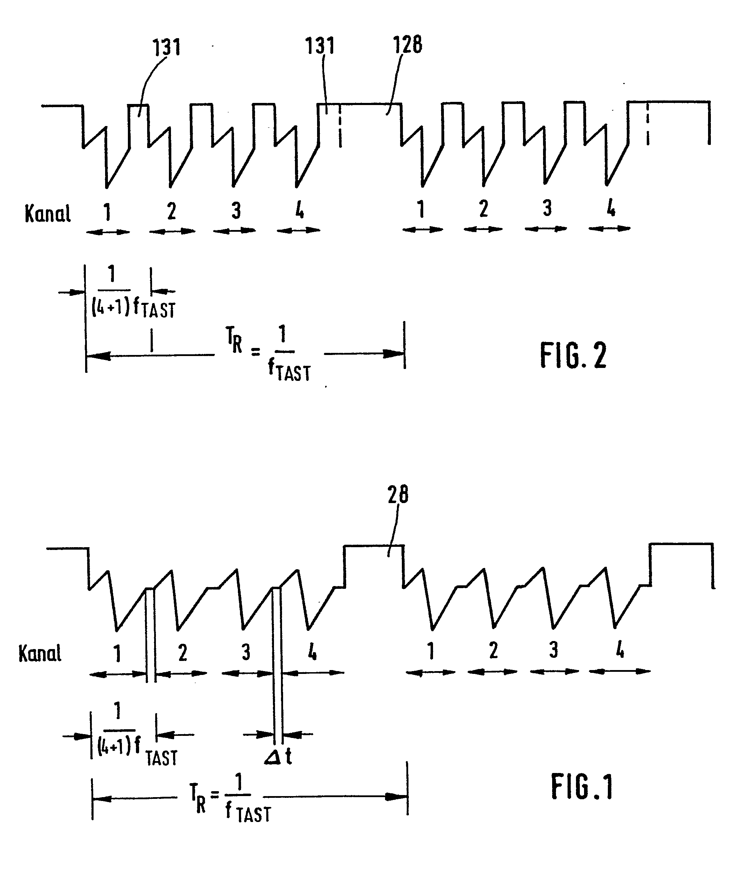

㉗ Bei einem Verfahren zur gleichzeitigen Übertragung von in parallelen Nachrichtenkanälen auftretenden Nachrichten zwischen einem Sender und einem Empfänger über einen einzigen Übertragungskanal durch Zusammenfassen der Nachrichtenkanäle im Zeitmultiplexbetrieb werden zwecks Vereinfachung des Aufwandes für Synchronisation und Stromversorgung des Empfängers dem durch die Abtastung der Nachrichtenkanäle entstehenden Multiplexsignal senderseitig Impulse aufgeprägt, die zur Synchronisation und Stromversorgung des Empfängers dienen. Die niederohmigen 12 V-Impulse werden entweder als Rahmenimpulse (128) jeweils an den Anfang oder an das Ende eines Impulsrahmens ($T_R$) des Multiplexsignals gesetzt oder zusätzlich als Clockimpulse (131) zwischen aufeinanderfolgenden Abtastproben in das Multiplexsignal eingefügt (Figur 2).

Kanal 1 2 3 4 1 2 3 4

$\frac{1}{(4+1)f_{TAST}}$

$T_R = \dfrac{1}{f_{TAST}}$

FIG. 2

EP 0 205 016 A2

Blaupunkt-Werke GmbH                28.5.1985
3200 Hildesheim                     R.Nr. 1869


Verfahren zur gleichzeitigen Übertragung von in
parallelen Nachrichtenkanälen auftretenden Nachrichten


Die Erfindung betrifft ein Verfahren zur gleichzeitigen
Übertragung von in parellelen Nachrichtenkanälen auftretenden Nachrichten zwischen einem Sender und einem Empfänger über einen einzigen Übertragungskanal durch Zusammenfassen der Nachrichtenkanäle im Zeitmultiplexbetrieb
der im Oberbegriff des Anspruchs 1 angegebenen Gattung.

Bei einem bekannten Verfahren dieser Art sind im Sender
und Empfänger für deren Synchronisation Taktgeneratoren
vorgesehen, die mittels auf einer separaten Übertragungsstrecke übertragenen Synchronimpulsen synchronisiert werden. Außerdem ist zu dem Empfänger eine separate Stromversorgungsleitung geführt, wenn der Empfänger nicht
eine eigene unabhängige Stromquelle besitzt.

Der Erfindung liegt die Aufgabe zugrunde, ein Verfahren
zur Übertragung von Nachrichten der eingangs genannten
Art derart zu verbessern, daß außer der für das Multiplexsignal erforderlichen Übertragungsstrecke keine zusätzlichen Leitungen zwischen Sender und Empfänger erforderlich sind.

0205016

Die Aufgabe ist bei einem Übertragungsverfahren der im Oberbegriff des Anspruchs 1 angegebenen Gattung erfindungsgemäß durch die Merkmale im Kennzeichenteil des Anspruchs 1 gelöst.

Bei dem erfindungsgemäßen Verfahren werden die dem Multiplexsignal aufgeprägten niederohmigen Spannungsimpulse gleichzeitig mit über die Übertragungsstrecke, die z.B. ein einfaches Koaxkabel sein kann, übertragen. Empfängerseitig werden die dem Multiplexsignal aufgeprägten Impulse zur Synchronisation der Kanalzuordnung und zur Stromversorgung des Empfängers herangezogen. Eine separate Übertragungsleitung für die Synchronisation entfällt ebenso wie eine eigene Stromversorgungsquelle für den Empfänger.

Das Aufprägen der Spannungsimpulse läßt sich entweder gemäß der Ausgestaltung des Verfahrens nach Anspruch 3 durch Setzen von Spannungsimpulsen jeweils an Anfang oder Ende der einzelnen Impulsrahmen des Multiplexsignals als sog. Rahmenimpulse oder gemäß der Ausgestaltung des Verfahrens nach Anspruch 4 durch Einfügen von Clockimpulsen zwischen die Abtastproben der einzelnen Kanäle zusätzlich zu den Rahmenimpulsen realisieren. Unter Impulsrahmen wird das Zeitintervall zwischen zwei aufeinanderfolgenden Abtastungen des gleichen Nachrichtenkanals verstanden. Dieses Zeitintervall ist gleich dem Kehrwert der Abtastfrequenz der einzelnen Nachrichtenkanäle.

Die erstgenannte Alternative des erfindungsgemäßen Verfahrens hat den Vorteil, daß die Zeitanteile der einzelnen Abtastwerte oder Abtastproben der zu übertragenden Nachrichten groß bemessen werden können und so die Übertragung mit größerer Störsicherheit erfolgt. Im Zeitintervall zwischen Abtastungen von aufeinanderfolgenden Kanälen, das vorteilhaft dem Kehrwert der (n+1)-fachen Abtastfrequenz gemacht wird (n ist dabei die Zahl der parallelen Nachrichtenkanäle), muß bei Pulsamplitudenmodulation (PAM) die Abtastprobe der Nachricht als amplitudenmodulierter Impuls, bei Pulsphasenmodulation (PPM) ein durch die Amplitude der Abtastprobe in der Phase modulierter Impuls und bei der Pulscodemodulation (PCM) ein die Amplitude der Abtastprobe darstellendes Codewort und zusätzlich jeweils ein Sicherheitsabstand $\Delta t$ zur Einhaltung bestimmter Nebensprechwerte zwischen den Kanälen untergebracht werden.

Die zweitgenannte Alternative des erfindungsgemäßen Verfahrens zeichnet sich dadurch aus, daß die Zeitanteile der dem Multiplexsignal aufgeprägten Spannungsimpulse sehr groß sind und damit die Energieübertragung sehr groß ist. Außerdem ist durch die jedem Abtastwert oder jeder Abtastprobe folgenden Clockimpulse die Synchronisation des Empfängers sehr einfach. Die Clockimpulse werden vorteilhaft im Sicherheitsabstand $\Delta t$ im Zeitintervall zwischen zwei Abtastproben oder Abtastwerten eingefügt, der entsprechend vergrößert werden kann.

Die Erfindung ist anhand von zwei Verfahrensvarianten, die anhand der Zeichnung im einzelnen erläutert werden, im folgenden näher beschrieben. Es zeigen:

Fig. 1    eine schematische Darstellung eines Multiplexsignals mit aufgeprägten Rahmenimpulsen,

Fig. 2   eine schematische Darstellung eines Multiplexsignals mit aufgeprägten Rahmen- und
         Clockimpulsen,

Fig. 3   jeweils ein Blockschaltbild eines Senders
und  4   bzw. eines Empfängers zur Generierung und
         Verarbeitung des Multiplexsignals in Fig.1,

Fig. 5   jeweils ein Blockschaltbild eines Senders
und  6   bzw. eines Empfängers zur Generierung und
         Verarbeitung des Multiplexsignals in Fig.2.

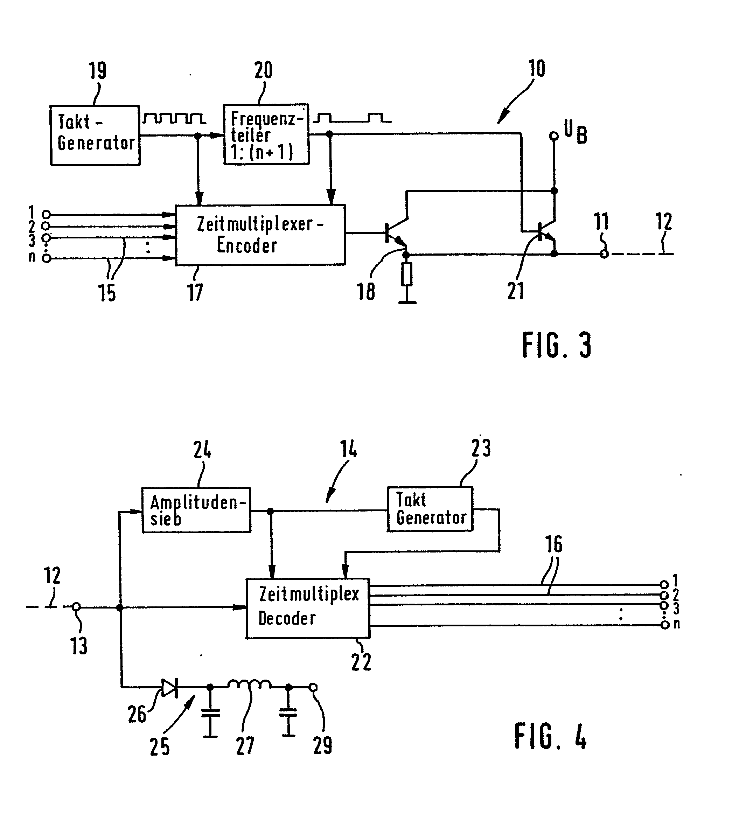

In Fig. 3 ist ein Sender 10 dargestellt, der über eine an
seinem Ausgang 11 angeschlossene Übertragungsstrecke. 12,
z.B. ein Koaxialkabel, mit dem Eingang 13 eines Empfängers 14 verbunden ist. Dem Sender 10 sind n parallele
Nachrichtenkanäle 15 zugeführt, in welchen Nachrichten
als Zeitfunktionen auftreten. Im Empfänger 14 geht die
gleiche Anzahl von n parallelen Nachrichtenkanälen 16
ab, in welchen jeweils die Nachrichten in den einzelnen
Nachrichtenkanälen 15 des Senders 10 nach Übertragung
über die Übertragungsstrecke 12 in genauer Zuordnung
abgenommen werden können.

Der Sender 10 weist einen Zeitmultiplex-Encoder 17 auf,
der in vorgegebenen Zeitintervallen die n Nachrichtenkanäle 15 nacheinander ansteuert. Der Zeitmultiplex-
Encoder 17 wird von einem Taktgenerator 19 gesteuert
und mit jedem Taktimpuls auf den nächsten Nachrichtenkanal 15 geschaltet. Im Zeitmultiplex-Encoder 17 werden
die in den Kanälen 15 auftretenden Nachrichten oder
Signale nach Bandbegrenzung und Verstärkung
jeweils mit einer Abtastfrequenz $f_{TAST}$ abgetastet, die größer als das 2-fache der vorhandenen höchsten Frequenz in den Nachrichtenkanälen 15 bemessen ist. Die einzelnen Abtastwerte oder Abtastproben der in aufeinanderfolgender Reihenfolge abgetasteten Nachrichtenkanäle 15 werden nacheinander über eine als Emitterfolge ausgebildete Anpaßstufe 18 auf die Übertragungsstrecke 12 gegeben, so daß hier ein aus den Abtastproben sich zusammensetzendes Multiplexsignal übertragen wird. Die Zeitintervalle, in welchen die Nachrichtenkanäle 15 nacheinander abgetastet werden, entspricht dem Kehrwert der (n+1)-fachen Abtastfrequenz $f_{TAST}$, wobei n wiederum die Zahl der Nachrichtenkanäle 15 ist. Die Taktfrequenz des Taktgenerators 19 beträgt damit $(n+1) \cdot f_{Tast}$.

Das entstehende Multiplexsignal ist in Fig. 1 über der Zeit dargestellt. Für die einzelnen Abtastproben sind der einfachen Darstellung wegen gleiche Amplituden angenommen. Aus Gründen der Einhaltung bestimmter Nebensprechwerte ist zwischen den Abtastproben aufeinanderfolgender Nachrichtenkanäle 15 jeweils ein Sicherheitsabstand $\Delta t$ eingehalten. Das Zeitintervall zwischen den einzelnen Abtastproben beträgt, einschließlich des Sicherheitsabstands $\Delta t$, $1/(n+1) \cdot f_{TAST}$. Das Zeitintervall zwischen zwei Abtastwerten aus dem gleichen Nachrichtenkanal 15, das dem Kehrwert der Abtastfrequenz $f_{TAST}$ entspricht, wird als Impulsrahmen $T_R$ des Multiplexsignals bezeichnet. Im Beispiel der Fig. 1 ist ein Multiplexsignal dargestellt, das durch Abtastung von vier Nachrichtenkanäle 15 entsteht. Die den einzelnen Nachrichten in den verschiedenen Kanälen entnommenen Amplitudenproben sind in Fig. 1 durch Zuordnung der Kanalnummern gekennzeichnet.

Wie aus Fig.1 ersichtlich wird in jedem ersten oder (n+1)-ten Intervall an den Anfang oder das Ende eines Impulsrahmens $T_R$ ein Rahmenimpuls 28 gesetzt. Der Rahmenimpuls 28 wird von einem sehr niederohmigen 12 V-Impuls mit der Impulsdauer von einem Intervall, also $1/(n+1) \cdot f_{TAST}$ gebildet. Hierzu ist im Sender 10 dem Taktgenerator 19 ein Frequenzteiler 20 nachgeschaltet, dessen Teilerverhältnis $1:(n+1)$ beträgt. Am Ausgang des Frequenzteilers 20 steht damit eine Steuerimpulsfolge mit der Frequenz $f_{TAST}$ und einem Tastverhältnis von $1/(n+1)$ an. Unter Tastverhältnis wird das Verhältnis der Steuerimpulsdauer zur Steuerimpulsperiode verstanden.

Die Steuerimpulse am Ausgang des Frequenzteilers 20 gelangen einerseits zu dem Zeitmultiplex-Encoder 17 und andererseits an die Basis eines Transistors 21, dessen Kollektor an Betriebsspannung $U_B$ von 12 V und dessen Emitter mit dem Ausgang 11 des Senders 10 verbunden ist. Die Steuerimpulse bewirken im Zeitmultiplex-Encoder 17 eine Unterbrechung der Kanalaufschaltung für ein Zeitintervall von $1/(n+1) \cdot f_{TAST}$ und für das gleiche Intervall eine Aufschaltung der Betriebsspannung $U_B$ von 12 V auf den Ausgang 11 des Senders 10. Damit wird dem Multiplexsignal für die Dauer eines Zeitintervalls von $1/(n+1) \cdot f_{Tast}$ ein 12 V-Rahmenimpuls 28 aufgeprägt, und zwar mit einer konstanten Frequenz von $f_{TAST}$.

Der Empfänger 14 weist einen Zeitmultiplex-Decoder 22 auf, der von einem Taktgenerator 23 mit der Taktfrequenz $(n+1) \cdot f_{TAST}$ gesteuert wird. Der Zeitmultiplex-Decoder 22 verbindet im Takt dieser Steuerung aufeinanderfolgend die Nachrichtenkanäle 16 mit dem Eingang 13 des Empfängers 14. Die Synchronisation des Taktgenerators 23 erfolgt durch die am Eingang 13 abgenommenen und mittels eines Amplitudensiebes 24 aus dem Multiplexsignal ausgefilterten Rahmenimpulse 28, die zugleich für die Zeit ihrer Impulsdauer den Zeitmultiplex-Decoder 22 sperren, so daß nach n-maligem Aufschalten des Eingangs 13 des Empfängers 14 auf jeweils einen der n Nachrichtenkanäle 16 mit Auftreten des Rahmenimpulses 28 und für dessen Zeitdauer kein Nachrichtenkanal 16 angesteuert wird.

An dem Eingang 13 des Empfängers 14 ist neben dem Zeitmultiplex-Decoder 22 und dem Amplitudensieb 24 noch eine Stromversorgungsstufe 25 angeschlossen, welche einen Gleichrichter 26 und einen Tiefpaß 27 aufweist. Die Stromversorgungsstufe 25 gewinnt aus den Rahmenimpulsen 28 des Multiplexsignals eine Versorgungs-Gleichspannung für den Betrieb des Empfängers 14, die am Ausgang 29 der Stromversorgungsstufe 25 ansteht.

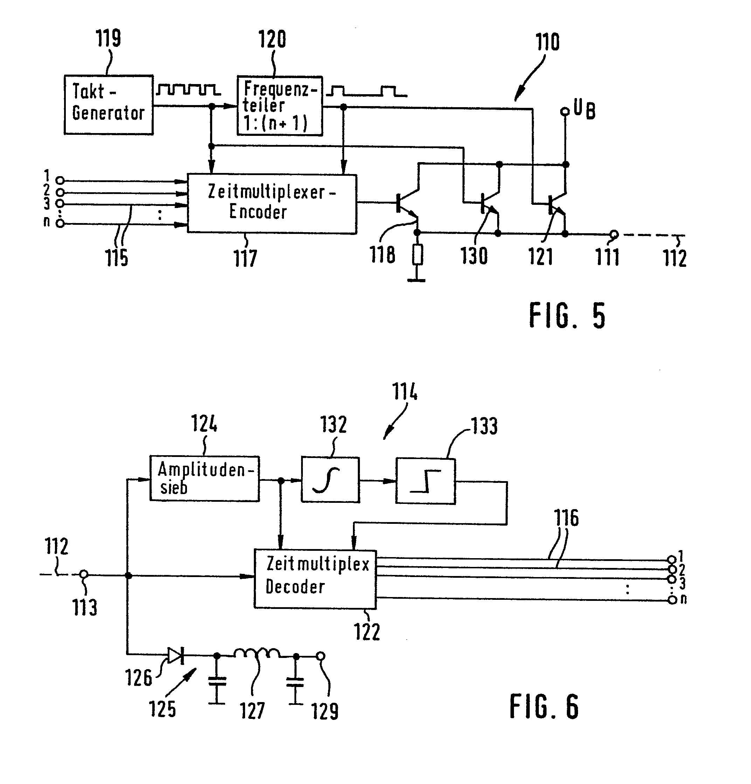

Der in Fig. 5 als weiteres Ausführungsbeispiel im Blockschaltbild dargestellte Sender 110 ist bis auf einen Transistor 130 identisch mit dem zu Fig. 3 beschriebenen Sender 10, so daß gleiche Bauteile mit gleichen, jedoch um 100 erhöhten Bezugzeichen versehen sind. Der Transistor 130 ist dem Transistor 121 parallel geschaltet und mit seinem Kollektor an der Betriebsspannung $U_B$ und mit seinem Emitter an dem Ausgang 111 des Senders 110 angeschlossen. Die Basis des Transistors 130 ist mit dem Ausgang des Taktgenerators 119 verbunden. Bei der Abtastung der n parallelen Nachrichtenkanäle 115 entsteht ein Multiplexsignal, dem mit einer Frequenz von $f_{TAST}$ mittels des Transistors 121 Rahmenimpulse 128 und mit der Frequenz $(n+1) \cdot f_{Tast}$ mittels des Transistors 130 Clockimpulse 131 aufgeprägt sind. Das auf der Übertragungsstrecke 112 zum Empfänger 114 übertragene
Multiplexsignal ist in Fig. 2 schematisch in Abhängigkeit von der Zeit dargestellt. Die Anzahl der vorhandenen Kanäle ist wiederum mit vier angenommen. Die
den einzelnen Kanälen entnommenen Abtastproben sind
durch die Zuordnung der Kanalnummern gekennzeichnet.
Zwischen aufeinanderfolgenden Amplituden- oder Abtastproben ist jeweils ein Clockimpuls 131 eingefügt, so
daß in jedem Zeitintervall $1/(n+1) \cdot f_{TAST}$ zwischen zwei
aufeinanderfolgenden Amplitudenproben jeweils eine
Amplitudenprobe und ein Clockimpuls 131 untergebracht ist.
Das Verhältnis der Zeitdauer von Amplituden- oder
Abtastprobe und Clockimpuls 131 ist durch das Tastverhältnis des Taktgenerators 119 festgelegt. Die
Clockimpulse 131 übernehmen zusätzlich noch die Aufgabe des im Multiplexsignal der Fig.1 vorgesehenen
Sicherheitsabstandes $\triangle t$, so daß ein solcher nicht
zusätzlich vorgesehen werden muß. Wie in dem Multiplexsignal in Fig.1 ist wiederum am Anfang bzw. am
Ende eines jeden Impulsrahmens $T_R$ des Multiplexsignals
ein Rahmenimpuls 128 vorhanden.

Auch der an der Übertragungsleitung 112 angeschlossene
Empfänger 114 in Fig. 6 ist weitgehend identisch mit
dem in Fig.4 dargestellten Empfänger 14, so daß gleiche Bauteile mit gleichen, um die Zahl 100 erhöhten
Bezugszeichen versehen sind. Die zeitsynchrone Ansteuerung des Zeitmultiplex-Decoders 122 erfolgt unmittelbar durch die Clockimpulse 131, die mittels des
Amplitudensiebes 124 aus dem Multiplexsignal ausgefiltert und dem Zeitmultiplex-Decoder 122 zugeführt werden.
Mit der Frequenz dieser Clockimpulse 131 wird der Eingang
113 des Empfängers 114 auf die einzelnen Nachrichtenkanäle 116 nacheinander aufgeschaltet, so daß die einzelnen Abtastproben wieder synchron den einzelnen Nachrichtenkanälen 116 zugeordnet werden. An dem mit dem Zeitmultiplex-Decoder 122 verbundenen Ausgang des Amplitudensiebes 124 ist ein Integrator 132 angeschlossen, dessen Ausgang über einen Schwellwertschalter 133 mit dem Zeitmultiplex-Decoder 122 verbunden ist. In dem Integrator 132 werden innerhalb eines Impulsrahmens $T_R$ die Clockimpulse 131 und der Rahmenimpuls 128 aufintegriert und damit bei Auftreten des Rahmenimpulses 128 die Schaltschwelle des Schwellwertschalters 133 überschritten. Das Ausgangssignal des Schwellwertschalter 133 blockiert für die Dauer eines Zeitintervalls $1/(n+1) \cdot f_{TAST}$, das der Dauer eines Rahmenimpulses 128 entspricht, die Aufschaltung eines Nachrichtenkanals 116 durch den Zeitmultiplex-Decoder 122 auf den Eingang 113 des Empfängers 114, so daß für die Dauer des Auftretens eines Rahmenimpulses 128 keine der Nachrichtenkanäle 116 mit dem Eingang 113 verbunden ist.

Die Stromversorgungsstufe 125 gewinnt aus den übertragenen Rahmenimpulsen 128 und Clockimpulsen 131 in gleicher Weise einer Versorgungsgleichspannung. Wegen der ingesamt größeren Zeitdauer der übertragenen niederohmigen 12 V-Impulse, welche die Clockimpulse 131 und die Rahmenimpulse 128 repräsentieren, steht für die Stromversorgung des Empfängers 114 eine wesentlich größere Energie zur Verfügung. Wie aus Fig.2 ersichtlich ist, ist die Impulsdauer der Rahmenimpulse 128 ein Mehrfaches der Impulsdauer der Clockimpulse 131.

-.-.-.-.-.-.-.-

0205016

Blaupunkt-Werke GmbH

3200 Hildesheim

28.5.1985

R.Nr. 1869

Patentansprüche

1. Verfahren zur gleichzeitigen Übertragung voh in parallelen Nachrichtenkanälen auftretenden Nachrichten zwischen einem Sender und einem Empfänger über einen einzigen Übertragungskanal durch Zusammenfassen der Nachrichtenkanäle im Zeitmultiplexbetrieb, bei welchem senderseitig die einzelnen Nachrichtenkanäle jeweils in bestimmten Zeitintervallen mit Abtastfrequenz abgetastet und die Abtastproben zeitseriell als Multiplexsignal auf den Übertragungskanal gegeben werden und bei welchem empfängerseitig die einzelnen Abtastproben wieder synchron den einzelnen Nachrichtenkanälen zugeordnet werden, d a d u r c h   g e k e n n - z e i c h n e t,  daß dem Multiplexsignal der empfängerseitigen Synchronisation und/oder Stromversorgung dienende Impulse (28;128,131) aufgeprägt werden.

2. Verfahren nach Anspruch 1, d a d u r c h   g e - k e n n z e i c h n e t,  daß die Impulse als sehr niederohmige Spannungs-Impulse generiert werden.

3. Verfahren nach Anspruch 1 oder 2, d a d u r c h
g e k e n n z e i c h n e t, daß die Impulse als
Rahmenimpulse (28;128) jeweils an den Anfang oder
an das Ende eines Impulsrahmens ($T_R$) des Multiplexsignals gesetzt werden.

4. Verfahren nach Anspruch 3, d a d u r c h g e -
k e n n z e i c h n e t, daß die Impulse zusätzlich als Clockimpulse (131) zwischen aufeinanderfolgenden Abtastproben in das Multiplexsignal eingefügt werden.

5. Verfahren nach Anspruch 4, d a d u r c h g e -
k e n n z e i c h n e t, daß die Impulsdauer
von Rahmen- und Clockimpulsen (128,131) unterschiedlich bemessen und vorzugsweise die der
Rahmenimpulse (128) größer gemacht wird.

6. Verfahren nach einem der Ansprüche 1 - 5, d a -
d u r c h g e k e n n z e i c h n e t, daß die
Folgefrequenz der Abtastproben gleich dem
(n+1)-fachen der Abtastfrequenz ($f_{TAST}$) bemessen
ist, wobei n die Anzahl der Nachrichtenkanäle (15;
115) angibt.

-.-.-.-.-.-.-.-

0205016

Kanal  1   2   3   4      1   2   3   4

$$\frac{1}{(4+1)\,f_{TAST}}$$

$$T_R = \frac{1}{f_{TAST}}$$

**FIG. 2**

Kanal  1   2   3   4      1   2   3   4

$$\frac{1}{(4+1)\,f_{TAST}}$$

$\Delta t$

$$T_R = \frac{1}{f_{TAST}}$$

**FIG. 1**

**FIG. 3**

Takt-Generator [19]

Frequenzteiler 1:(n+1) [20]

[10]

$U_B$

Zeitmultiplexer-Encoder [17]

1
2
3
n

[15]

[18]

[11] [12]

[21]

**FIG. 4**

Amplitudensieb [24]

[14]

Takt Generator [23]

[12]

Zeitmultiplex Decoder [22]

[16]

1
2
3
n

[13]

[26]

[25] [27] [29]

R.Nr. 1869

0205016

FIG. 5

FIG. 6